# EUROPÄISCHE PATENTSCHRIFT

(11) **EP 1 493 648 B1**
(45) Veröffentlichungstag und Bekanntmachung des Hinweises auf die Patenterteilung: **18.10.2006**
(21) Anmeldenummer: 04013822.4
(22) Anmeldetag: 11.06.2004
(51) Int. Cl.: B62D 1/16

(54) **Lenkvorrichtung für ein Kraftfahrzeug**
Steering device for a vehicle
Dispositif de direction pour un véhicule

(30) Priorität: 30.06.2003 DE 10329291
(43) Veröffentlichungstag der Anmeldung: 05.01.2005
(73) Patentinhaber: ZF Lenksysteme GmbH, 73527 Schwäbisch Gmünd (DE)
(72) Erfinder: Budaker, Martin, 73540 Heubach (DE); Hägele, Michael, 73432 Aalen (DE); Ochs, Michael, 73566 Bartholomä (DE)

(56) Entgegenhaltungen:
- DE-A1- 10 017 049
- US-A- 3 654 820
- US-A- 6 065 561
- US-A1- 2002 079 687

## Beschreibung

Die Erfindung betrifft eine Lenkvorrichtung für ein Kraftfahrzeug mit einer Lenkspindel mit einem Außengewinde, auf dem ein Gewindeelement angeordnet ist. Eine gattungsgemäße Lenkvorrichtung ist aus der DE 100 17 049 A1 bekannt.

Manuelle bzw. mit Hilfskraft unterstützte Lenkvorrichtungen, insbesondere Steer-by-wire Lenksysteme, wie sie beispielsweise aus der DE 198 01 393 C1 bekannt sind, weisen den Nachteil auf, dass die Lenkbegrenzung durch das Anschlagen des Radträgers (Achsschenkel) am Lenker der Radaufhängung erfolgt. Diese Anschläge müssen große Kräfte, die durch die mechanische Übersetzung oder durch die Lenkkraftunterstützung erzeugt werden, aufnehmen.

Wenn, wie bei einem Steer-by-wire Lenksystem, die Lenkkraft ausschließlich von einer im Fahrzeug vorhandenen Energiequelle aufgebracht wird, d.h. das Lenkhandrad lediglich über eine Regelstrecke wirkungsmäßig mit einem die Fahrzeuglenkräder betätigendem Motor verbunden ist, erhält der Fahrer von einem solchen Lenksystem keine Anschlagrückmeldung am Lenkhandrad und es besteht die Gefahr, dass eine Wickelfeder an der Lenkspindel, die der Messwerteerfassung dient, dadurch abgerissen werden kann.

Von Nachteil ist darüber hinaus, dass für den Fahrer ein ungewohntes Lenkverhalten entsteht, wenn das Lenkrad aufgrund einer fehlenden Rückmeldung beliebig viele Lenkumdrehungen durchführen kann.

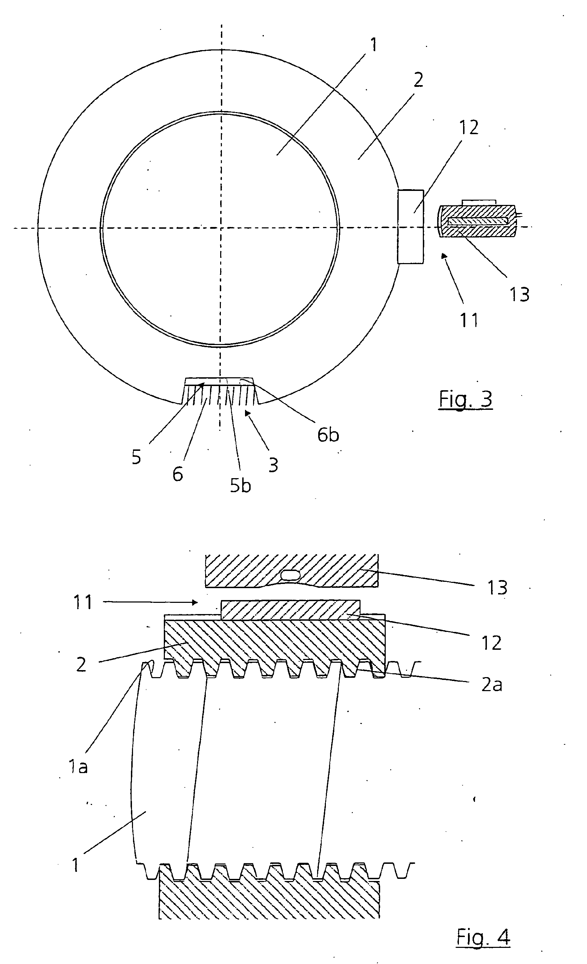

Aus der gattungsgemäßen Schrift, der DE 100 17 049 A1 ist eine Lenkvorrichtung bekannt, bei der die Lenkspindel ein Außengewinde aufweist, auf das eine Mutter aufschraubbar ist. Durch eine parallel zur Lenkspindel verlaufende Gehäuseführung, in die ein mit der Mutter verbundener Stift ragt, wird die Mutter gegen Verdrehen gesichert. Bei einer Drehbewegung der Lenkspindel bewegt sich die Mutter somit linear in Längsrichtung der Spindel. Die Lenkspindel weist dabei zwei Begrenzungsglieder auf, zwischen denen sich die Mutter in Abhängigkeit der Drehbewegung bewegen kann. Dies ist in Fig. 3 und Fig. 4 der gattungsgemäßen Schrift entsprechend dargestellt und an geeigneter Stelle beschrieben. Sobald die Mutter in Kontakt mit den Begrenzungsgliedern kommt, wird die Drehbewegung der Lenkspindel abrupt gestoppt. Von Nachteil ist dabei, dass bei hohen Lenkgeschwindigkeiten aufgrund des kurzen Verzögerungsweges sehr hohe Kräfte auf die Begrenzungsglieder bzw. die Mutter aufgrund des Anschlages wirken.

Von Nachteil ist darüber hinaus, dass aufgrund von Fertigungstoleranzen die genaue Anzahl von Lenkradumdrehungen bzw. der max. Lenkwinkel nicht eingehalten bzw. in der vorgesehenen Weise begrenzt werden kann.

Des weiteren ist es bei der gattungsgemäßen Schrift von Nachteil, dass aufgrund der notwendigen Fertigungstoleranzen zwischen dem Gewinde der Lenkspindel und dem Gewinde der Mutter ein größeres Spiel entsteht, das bei jedem Lenkrichtungswechsel als auch bei Kontakt mit den Begrenzungsgliedern ein Klackgeräusch verursacht.

Der vorliegenden Erfindung liegt daher die Aufgabe zugrunde, eine Lenkvorrichtung für Kraftfahrzeuge zu schaffen, bei der die durch eine Lenkhandhabe vorgegebene Lenkbewegung in einfacher, kostengünstiger und zuverlässiger Weise mittels einem mechanischen Endanschlag begrenzbar ist, wobei eine Geräuschentwicklung möglichst vermieden werden soll, die auftretenden Kräfte möglichst gering sein sollen und eine exakte Einstellung der maximalen Lenkradumdrehungen bzw. des maximalen Lenkwinkels möglich ist.

Erfindungsgemäß wird diese Aufgabe durch den kennzeichnenden Teil von Anspruch 1 gelöst.

Dadurch, dass ein Kraftelement die Linearführung an das Gewindeelement drückt, verschiebt sich die konzentrische Lage des Gewindeelementes zu der Lenkspindel, wodurch die Gewindeflanken zwischen Lenkspindel und Gewindeelement auf der Linearführungsseite anliegen. Die Lenkspindel und das Gewindeelement sind somit spielfrei, so dass keine Klackgeräusche entstehen. Eine Geräuschentwicklung durch das bisher große Spiel zwischen dem Gewinde des Gewindeelementes und der Lenkspindel ist somit eliminiert.

Durch das Kraftelement, das die Linearführung in Richtung auf das Gewindeelement drückt, entsteht außerdem eine vorteilhafte Verbindung zwischen dem Gewindeelement und der Linearführung, wodurch ebenfalls in diesem Bereich eine Geräuschentwicklung durch einen Lenkrichtungswechsel oder einen Anschlag an den Begrenzungsgliedern vermieden wird.

In nicht naheliegender Weise hat der Erfinder darüber hinaus erkannt, dass sich dadurch, dass die konzentrische Lage des Gewindeelementes zur Lenkspindel verschoben wird, eine Dämpfung beim Anschlag des Gewindeelementes an die Begrenzungsglieder ergibt. Dies resultiert daraus, dass sich das Gewindeelement in der Endposition, wenn große Momente abgestützt werden müssen, durch das Gewinde wieder auf der Lenkspindel zentriert und dadurch die Linearführung gegen die Kraft des Kraftelementes ausweicht. Das Zentrieren des Gewindeelementes und das Ausweichen der Linearführung gegen die Kraft des Kraftelementes stellt eine Anschlagsdämpfung dar, womit in vorteilhafter Weise sowohl die auftretenden Kräfte als auch das Klackgeräusch am Anschlag reduziert werden.

Von Vorteil ist es, wenn der Hub der Linearführung mittels einem Anschlag begrenzt ist.

In einfacher Weise wird somit das Ausweichen der Linearführung beschränkt, wodurch große Momente abgestützt werden können.

In einer konstruktiven Ausgestaltung der Erfindung kann vorgesehen sein, dass die Linearführung als Druckstück und das Kraftelement als Federelement ausgebildet ist.

Wie sich in Versuchen gezeigt hat, ergibt sich somit ein besonders vorteilhaftes Ausweichen der Linearführung im Bereich des Endanschlages und es ist darüber hinaus sichergestellt, dass die Linearführung zuverlässig an das Gewindeelement gedrückt wird.

In einer Weiterbildung der Erfindung kann ferner vorgesehen sein, dass der Durchmesser der Lenkspindel in einem Teilbereich reduziert ist.

Zur Reduzierung der Kräfte beim schnellen Lenken gegen den mechanischen Anschlag (Begrenzungsglieder) ist ein elastisches Element vorteilhaft. Von Vorteil ist es dabei, um kein zusätzliches Element zu verwenden, die Lenkspindel über einen gewissen Bereich im Durchmesser zu reduzieren, wodurch diese als Torsionsstab dient.

Dies ermöglicht den Abbau der Kräfte über einen größeren Verdrehbereich.

In einer konstruktiven Ausgestaltung der Erfindung kann ferner vorgesehen sein, dass die Begrenzüngsglieder und/oder das Gewindeelement mit Anschlagelementen versehen ist. Von Vorteil zur Reduzierung der Kräfte beim schnellen Lenken gegen den mechanischen Anschlag (Begrenzungsglieder) kann es dabei sein, wenn die Anschlagelemente in dem Gewindeelement bzw. den Begrenzungsgliedern elastisch geführt sind.

In einer Weiterbildung der Erfindung kann vorgesehen sein, dass die Verbindung zwischen der Lenkspindel und den Begrenzungsgliedern mittels einer Verzahnung erfolgt.

Eine Ausführung der Verbindung zwischen der Lenkspindel und den Begrenzungsgliedern als Verzahnung gewährleistet eine sichere Momentenübertragung. Des weiteren braucht das Gewinde der Lenkspindel und des Gewindeelementes sowie das Gewindeelement zu den beiden Begrenzungsgliedern nicht stellungsgebunden gefertigt werden.

Durch die Verzahnung zwischen der Lenkspindel und den Begrenzungsgliedern ist es in besonders vorteilhafter Weise möglich, die Endposition der Begrenzungsglieder zum Ausgleich der Fertigungstoleranzen exakt einzustellen. Die Position der Begrenzungsglieder, die einen Faktor darstellen, der den maximalen Lenkwinkel bzw. die maximale Anzahl an Lenkradumdrehungen beeinflusst, kann somit exakt eingestellt und gegebenenfalls nachjustiert werden. In der vorgesehenen Endposition ist es möglich, die Begrenzungsglieder beispielsweise durch Aufbringen einer Verschraubung oder durch Verschweißen zusätzlich zu Fixieren. Besonders vorteilhaft ist dabei das Aufbringen einer Mutter auf die Lenkspindel, die auf Kontakt zu den Begrenzungsgliedern geschraubt wird.

Von Vorteil ist es, wenn das Gewindeelement als Mutter ausgebildet ist.

Eine Ausbildung des Gewindeelementes als Mutter hat sich bezüglich der Befestigung der Anschlagelemente sowie einer einfachen und kostengünstigen Ausführungsform als besonders geeignet herausgestellt. Alternativ hierzu kann das Gewindeelement jedoch auch halbkreisförmig bzw. etwas mehr als halbkreisförmig ausgebildet sein. Durch die Führung des Gewindeelementes in der Linearführung ist auch in diesen Ausführungsformen ein zuverlässiger Endanschlag gewährleistet.

Vorteilhafte Ausgestaltungen und Weiterbildungen der Erfindung ergeben sich aus den weiteren Unteransprüchen sowie aus den nachfolgend anhand der Zeichnung prinzipmäßig dargestellten Ausführungsbeispielen.

Es zeigt:
- Fig. 1: einen Längsschnitt durch den mit einem Gewindeelement versehenen Teilbereich einer Lenkspindel;
- Fig. 2: einen Querschnitt gemäß der Linie II-II der Fig. 1;
- Fig. 3: einen Querschnitt durch eine Lenkspindel mit einer Magnet-/Sensoranordnung; und
- Fig. 4: einen Längsschnitt durch eine Lenkspindel mit einer Magnet-/Sensoranordnung.

Lenkvorrichtungen für Kraftfahrzeuge sind aus dem allgemeinen Stand der Technik hinlänglich bekannt, weshalb nachfolgend nur auf die für die Erfindung wesentlichen Merkmale näher eingegangen wird.

Steer-by-wire Lenksysteme, für die sich die erfindungsgemäße Lösung in besonders vorteilhafter Weise eignet, sind ebenfalls aus dem Stand der Technik hinlänglich bekannt, wozu beispielsweise auf die DE 198 01 393 C1 sowie die DE 199 02 557 A1 verwiesen wird.

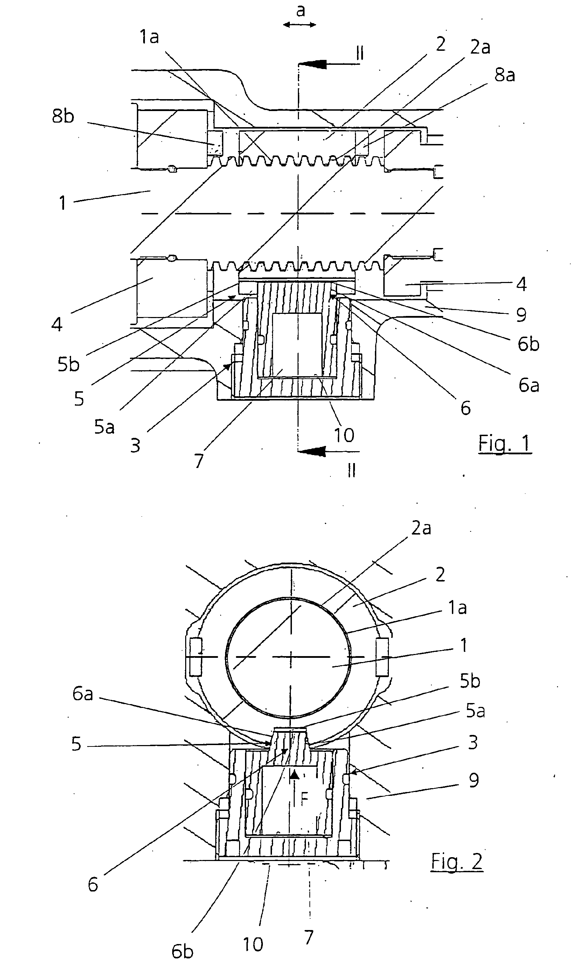

Fig. 1 zeigt eine Lenkspindel 1 mit einem Außengewinde 1a, das sich über einen Teilbereich der Lenkspindel 1 erstreckt. Auf das Außengewinde 1a der Lenkspindel 1 ist eine Gewindeelement 2 aufgeschraubt bzw. montiert. Das Gewindeelement 2 ist im Ausführungsbeispiel als Mutter 2 ausgebildet.

Wie sich aus einer Zusammenschau der Fig. 1 und der Fig. 2 ergibt, steht die Mutter 2 in Wirkverbindung mit einer Linearführung 3, wodurch ein Verdrehen der Mutter 2 verhindert wird. Eine Drehbewegung der Lenkspindel 1 führt somit zu einer Linearbewegung der Mutter 2 in Richtung des Pfeiles a der Fig. 1, d.h. axial zur Lenkspindel 1. Die Linearbewegung der Mutter 2 wird durch zwei Begrenzungsglieder 4, die im Ausführungsbeispiel als Begrenzungsplatten ausgebildet sind, begrenzt.

Wie aus Fig. 1 ersichtlich, kann sich die Mutter 2 zwischen den Begrenzungsplatten 4 in Abhängigkeit der Drehbewegung der Lenkspindel 1 bewegen. Sobald die Mutter 2 in Kontakt mit einer Begrenzungsplatte 4 kommt, wird die Drehbewegung der Lenkspindel 1 gestoppt. Durch die Begrenzungsplatten 4 lässt sich somit (in einem bestimmten Bereich) ein maximaler Lenkwinkel bzw. eine maximale Anzahl an Lenkradumdrehungen einstellen.

Das von einem nicht dargestellten Lenkrad auf die Lenkspindel 1 eingeleitete Drehmoment wird durch das Außengewinde 1a der Lenkspindel 1 über das Innengewinde 2a der Mutter 2 auf diese übertragen. Um die Mutter 2 am Mitdrehen zu hindern, ist im Ausführungsbeispiel eine Nut-Federverbindung vorgesehen. Dabei ist die Mutter 2 mit einer Längsnut 5 versehen, die einen trapezförmigen Querschnitt aufweist. Die Flanken 5a der Nut 5 verjüngen sich dabei in Richtung auf die Achse der Mutter 2 und enden in einem sogenannten Nutgrund 5b. In die Längsnut 5 der Mutter 2 greift eine Feder, die im Ausführungsbeispiel als Steg 6 der Linearführung 3 ausgebildet ist, ein. Der Steg 6 ist für einen Eingriff in die Längsnut 5 ausgebildet. Der Steg 6 weist Flanken 6a auf, deren Verlauf bzw. Winkel im wesentlichen den Winkeln der Flanken 5a entsprechen, so dass sich die Flanken 6a des Steges 6 im eingeführten Zustand gleichmäßig und im wesentlichen vollflächig an die Flanken 5a der Längsnut 5 anlegen.

Die Breite des Nutgrundes 5b der Längsnut 5 ist im Ausführungsbeispiel geringer als die Breite einer Frontfläche 6b des Steges 6. Daraus ergibt sich in besonders vorteilhafter Weise eine spielfreie, sichere und geräuschoptimierte Verbindung zwischen dem Steg 6 und der Längsnut 5. Dies resultiert daraus, dass die Linearführung 3 und somit auch der Steg 6 durch ein Kraftelement 7 an die Mutter 2 gedrückt wird. Der Steg 6 wird somit in die Längsnut 5 gedrückt. Da die Breite der Frontfläche 6b des Steges 6 die Breite des Nutgrundes 5b übersteigt, ist sichergestellt, dass die Flanken 6a in Kontakt mit den Flanken 5a kommen, bevor die Frontfläche 6b in Kontakt mit dem Nutgrund 5b kommt. Eine spielfreie und sichere Verbindung zwischen der Linearführung 3 und der Mutter 2 ist somit gewährleistet.

Selbstverständlich kann in alternativen Ausführungsformen auch eine andere Verbindung zwischen der Linearführung 3 und der Mutter 2 vorgesehen sein. Beispielsweise kann die Mutter 2 eine Feder, einen Steg, einen Vorsprung, einen Stift oder dergleichen aufweisen, der in einer Aussparung, einer Kulisse, einer Nut oder dergleichen der Linearführung 3 verläuft. Durch das Kraftelement 7, das die Linearführung 3 auch bei alternativen Ausführungsformen in Richtung auf die Mutter 2 drückt, ist in jedem Fall eine spielfreie Verbindung zwischen der Linearführung 3 und der Mutter 2 gewährleistet.

Erfindungsgemäß drückt das Kraftelement 7 die Linearführung 3 derart an die Mutter 2, dass die konzentrische Lage der Mutter 2 zu der Lenkspindel 1 verschoben wird. Dabei legen sich die Gewindeflanken des Außengewindes 1a der Lenkspindel 1 bzw. des Innengewindes 2a der Mutter 2 auf der Seite der Linearführung 3 aneinander an. Das Außengewinde 1a/das Innengewinde 2a ist so ausgeführt, dass genügend Kopfspiel vorhanden ist, um diese Querbewegung zu ermöglichen. Somit ist das Gewinde über den Hub spielfrei. Die Ausgestaltung des Gewindes, wie aus Fig. 1 ersichtlich, als Trapezgewinde ist hierfür besonders vorteilhaft.

Die Linearführung 3 ist, wie aus dem Ausführungsbeispiel ersichtlich, im wesentlichen als Druckstück ausgebildet. Das Kraftelement ist als Feder 7 ausgebildet. Alternativ dazu sind auch andere Ausbildungen zur Erzeugung einer Vorspannung möglich. Hierzu kann das Kraftelement 7 beispielsweise als elastisches Element ausgebildet sein, das derart an der von der Mutter 2 abgewandten Seite der Linearführung 3 angeordnet wird, dass diese in Richtung auf die Mutter 2 gedrückt bzw. vorgespannt wird.

Wie aus Fig. 1 ersichtlich, weisen die Mutter 2 sowie die Begrenzungsplatten 4 Anschlagelemente 8a, 8b auf. Bei der Drehung der Lenkspindel 1 bewegt sich die Mutter 2 auf die lenkspindelfesten Begrenzungsplatten 4 zu. Je nach Drehrichtung der Lenkspindel 1 begrenzt dabei eine der Begrenzungsplatten 4 die Linearbewegung der Mutter 2. Dabei legt sich ein Anschlagelement 8a der Mutter 2 in einer Drehbewegung an ein Anschlagelement 8b der die Linearbewegung begrenzenden Begrenzungsplatte 4 an. Somit ist die Endposition erreicht und das Drehmoment stützt sich von der Lenkspindel 1 über die Mutter 2 auf die Linearführung 3 bzw. ein die Linearführung 3 umfassendes Gehäuse 9 ab.

Das Anschlagelement 8a kommt in der Endposition mit seiner Seitenflanke in Kontakt mit einer Seitenflanke des Anschlagelementes 8b der Begrenzungsplatte 4. Zur Reduzierung der Kräfte beim schnellen Lenken gegen den als Begrenzungsplatte 4 ausgebildeten mechanischen Anschlag, kann eine elastische Dämpfung vorgesehen sein. Diese kann beispielsweise darin bestehen, die Anschlagelemente 8a, 8b elastisch auszubilden. Aufgrund der hohen auftretenden Kräfte hat sich jedoch eine Ausbildung der Anschlagelemente 8a, 8b aus Stahl als vorteilhaft erwiesen. Um trotzdem eine Dämpfung zu erreichen, kann vorgesehen sein, dass die Anschlagelemente 8a, 8b in der Mutter 2 bzw. den Begrenzungsplatten 4 elastisch geführt sind. Dadurch wird, wenn die Seitenflanken der Anschlagelemente 8a, 8b, in Kontakt miteinander kommen, ein definierter Verzögerungsweg geschaffen. Hierfür sind aus dem Stand der Technik verschiedene elastische Führungen nahegelegt.

Eine weitere Möglichkeit zur Reduzierung der Kräfte beim schnellen Lenken gegen die Begrenzungsplatten 4 kann darin bestehen, die Lenkspindel 1 über einen gewissen Bereich im Durchmesser zu reduzieren, so dass diese als Torsionsstab dient. Dies ermöglicht den Abbau der Kräfte über einen größeren Verdrehbereich.

In der Endposition, wenn große Momente abgestützt werden müssen, zentriert sich die Mutter 2, die durch die Feder 7 aus der konzentrischen Lage zu der Lenkspindel 1 verschoben wurde, wieder auf der Lenkspindel 1. Dadurch weicht die Linearführung 3 gegen die Federkraft der Feder 7 aus. Dieses Ausweichen der Linearführung 3 wird, damit große Momente abgestützt werden können, durch einen Anschlag 10 begrenzt. Der Hub der Linearführung 3 in eine von der Lenkspindel 1 abgewandte Richtung wird somit durch den Anschlag 10 begrenzt.

Die in Fig. 1 dargestellte Mutter 2 weist an beiden den Begrenzungsplatten 4 zugewandten Seiten jeweils ein Anschlagelement 8a auf. Zeichnerisch ist jedoch aufgrund der Schnittdarstellung nur ein Anschlagelement 8a dargestellt. Analog dazu weist jede Begrenzungsplatte 4 ein Anschlagelement 8b auf. Auch in diesem Fall ist aufgrund der Schnittdarstellung nur ein Anschlagelement 8b an einer Begrenzungsplatte 4 dargestellt. Die Anschlagelemente 8a, 8b können einstückig mit der Mutter 2 bzw. den Begrenzungsplatten 4 ausgebildet sein. Vorstellbar ist jedoch auch, dass die Anschlagelement 8a, 8b als separate Elemente ausgebildet sind und mittels bekannter Verbindungsverfahren mit der Mutter 2 bzw. den Begrenzungsplatten 4 verbunden werden.

Die Mutter 2 kann in einer alternativen Ausführungsform auch als Hülse ausgebildet sein. Vorstellbar ist ebenfalls eine lediglich halbkreisförmige Ausbildung der Mutter 2.

Die Verbindung zwischen den Begrenzungsplatten 4 und der Lenkspindel 1 ist im Ausführungsbeispiel als Verzahnung ausgeführt. Dies gewährleistet eine sichere Momentenübertragung. Des weiteren kann somit die Position der Begrenzungsplatten 4 exakt eingestellt und gegebenenfalls nachjustiert werden.

Fig. 3 und Fig. 4 zeigen eine Vorrichtung zum Erfassen eines Drehwinkels mittels einer Nachweis- bzw. Sensoreinrichtung 11 als Drehwinkelgeber. Dadurch soll der Drehwinkel des nicht dargestellten Lenkrades und damit auch der Drehwinkel der Lenkspindel 1 absolut ermittelt werden. Die Sensoreinrichtung 11 ist dabei als Magnet-/Sensoranordnung, wie nachfolgend beschrieben, ausgebildet. Wie bereits vorstehend beschrieben, wird durch eine Drehung am Lenkrad eine Drehung der Lenkspindel 1 eingeleitet. Über ein Gewinde der Lenkspindel 1 wird diese Drehbewegung in eine axiale Bewegung der Mutter 2 umwandelt. Wie aus Fig. 3 und Fig. 4 ersichtlich ist, ist auf der Mutter 2 ein Magnet 12 befestigt, der sich mit der Mutter 2 axial bewegt. Die Bewegung des Magneten 12 wird dabei über einen Sensor 13 erfasst. Im Ausführungsbeispiel ist der Sensor als magnetoresistiver Sensor 13 ausgebildet. Dieser misst die Feldrichtung des Magneten 12. Da die Position des Magneten 12 fix ist und die Steigung des Gewindes der Lenkspindel 1 bzw. der Mutter 2 bekannt ist, lässt sich so über die Position des Magneten 12 zum magnetoresistiven Sensor 13 ein Rückschluss auf den absoluten Drehwinkel ziehen.

Selbstverständlich kann die in Fig. 3 und Fig. 4 dargestellte Ausführungsform in die Ausführungsform gemäß Fig. 1 und Fig. 2 integriert werden, jedoch wurde aus Übersichtlichkeitsgründen eine separate und einzelne Darstellung gewählt.

In der bereits in Fig. 1 und Fig. 2 beschriebenen Weise verhindert auch bei der Ausführungsform gemäß Fig. 3 und Fig. 4 die Linearführung 3 ein Mitdrehen der Mutter 2 und sorgt dafür, dass aufgrund der Feder 7 (in Fig. 3 und Fig. 4 nicht dargestellt) die Verbindung zwischen der Linearführung 3 und der Mutter 2 spielfrei ist. Die Mutter 2 ist somit drehfest, aber axial verschiebbar. Wie bereits erwähnt, ist die Längsnut 5 der Mutter 2 vorzugsweise trapezförmig ausgeführt. Die Vorteile hierfür bzw. die angepasste Form des Steges 6, der in die Längsnut 5 ragt, wurden bereits vorstehend beschrieben.

Wie sich aus Fig. 4 ergibt, ist der für das magnetoresistive Messverfahren notwendige Magnet vorzugsweise als Stabmagnet 12 ausgebildet. Alternativ dazu ist auch eine Ausgestaltung als Magnetring vorstellbar.

Um eine eindeutige axiale Position des Stabmagneten 12 zu dem magnetoresistiven Sensor 13 zu garantieren, ist eine spielfreie Einstellung des verwendeten Getriebes (Lenkspindel 1/Mutter 2) notwendig. Dies kann in vorteilhafter Weise über den gleichen Einstellmechanismus wie bei der Verbindung zwischen Linearführung 3/Mutter 2 realisiert werden. Hierzu ist der Einsatz eines modifizierten Gewindes (Lenkspindel 1/Mutter 2) vorteilhaft, das genügend Kopfspiel hat, damit die angefederte Linearführung 3 die Gewindeflanken der Lenkspindel 1 und der Mutter 2 gegeneinander drücken kann. Wie bereits beschrieben, wird die Mutter 2 dadurch aus ihrer konzentrischen Lage quer zur Drehachse bewegt. Die Ausbildung des modifizierten Gewindes (Lenkspindel 1/Mutter 2) als Trapezgewinde mit Kopfspiel eignet sich hierfür in besonders vorteilhafter Weise.

Der magnetoresistive Sensor 13 ist gehäusefest. Um die axial notwendigen Toleranzen der Lagerung der Lenkspindel/Mutter-Einheit so groß wie möglich ausführen zu können, kann ein größerer Stabmagnet 12 verwendet werden, als es der Messbereich benötigen würde. Über ein einmaliges Einmessen nach dem Einbau wird die Position des Stabmagneten 12 zum magnetoresistiven Sensor 13 ermittelt.

In einer alternativen Ausführungsform ist selbstverständlich auch vorstellbar, dass der Magnet bzw. Stabmagnet 12 gehäusefest und der Sensor bzw. magnetoresistive Sensor 13 auf der Mutter 2 mitbewegt wird. Ebenso sind mehrere Magnete bzw. Stabmagnete 12 und mehrere Sensoren bzw. magnetoresistive Sensoren 13 aufgrund von Redundanzgründen einsetzbar.

### Bezugszeichen

- 1: Lenkspindel
- 1a: Außengewinde
- 2: Gewindeelement, Mutter
- 2a: Innengewinde
- 3: Linearführung
- 4: Begrenzungsglied, Begrenzungsplatte
- 5: Längsnut
- 5a: Flanken der Längsnut
- 5b: Nutgrund
- 6: Steg, Feder
- 6a: Flanken des Stegs
- 6b: Frontfläche des Stegs
- 7: Kraftelement
- 8a: Anschlagelement der Mutter
- 8b: Anschlagelement der Begrenzungsplatten
- 9: Gehäuse
- 10: Anschlag
- 11: Sensoreinrichtung
- 12: Magnet, Stabmagnet
- 13: Sensor, magnetoresistiver Sensor

## Patentansprüche

1. Lenkvorrichtung für ein Kraftfahrzeug mit einer Lenkspindel (1) mit einem Außengewinde (1a), auf dem ein Gewindeelement (2) angeordnet ist, welches aufgrund einer Wirkverbindung mit einer Linearführung (3) bei einer Drehbewegung der Lenkspindel (1) linear zwischen zwei Begrenzungsgliedern (4) bewegbar ist und somit die Drehbewegung der Lenkspindel (1) begrenzt,
**dadurch gekennzeichnet, dass**
ein Kraftelement (7) die Linearführung (3) derart an das Gewindeelement (2) drückt, dass sich die konzentrische Lage des Gewindeelementes (2) zu der Lenkspindel (1) verschiebt.

2. Lenkvorrichtung nach Anspruch 1,
**dadurch gekennzeichnet, dass**
die Linearführung (3) als Nut-Federverbindung ausgebildet ist.

3. Lenkvorrichtung nach Anspruch 2,
**dadurch gekennzeichnet, dass**
das Gewindeelement (2) eine trapezförmige Längsnut (5) aufweist.

4. Lenkvorrichtung nach Anspruch 2 oder 3,
**dadurch gekennzeichnet, dass**
die Linearführung (3) eine für einen Eingriff in die Längsnut (5) geeignete Feder bzw. einen Steg (6) aufweist.

5. Lenkvorrichtung nach Anspruch 3 und 4,
**dadurch gekennzeichnet, dass**
die Breite eines Nutgrundes (5b) der Längsnut (5) geringer ist als die Breite einer Frontfläche (6b) des Stegs (6).

6. Lenkvorrichtung nach Anspruch 5,
**dadurch gekennzeichnet, dass**
die Winkel der Flanken (5a) der Längsnut (5) im wesentlichen dem Winkel der Flanken (6a) des Stegs (6) entsprechen.

7. Lenkvorrichtung nach einem der Ansprüche 1 bis 6,
**dadurch gekennzeichnet, dass**
das Kraftelement als elastisches Element oder als Federelement (7) ausgebildet ist.

8. Lenkvorrichtung nach einem der Ansprüche 1 bis 7,
**dadurch gekennzeichnet, dass**
das Gewindeelement (2) und/oder die Begrenzungsglieder (4) mit Anschlagelementen (8a,8b) versehen sind.

9. Lenkvorrichtung nach Anspruch 8,
**dadurch gekennzeichnet, dass**
die Anschlagelemente (8a,8b) in dem Gewindeelement (2) bzw. den Begrenzungsgliedern (4) elastisch geführt sind.

10. Lenkvorrichtung nach einem der Ansprüche 1 bis 9,
**dadurch gekennzeichnet, dass**
der Hub der Linearführung (3) mittels einem Anschlag (10) begrenzt ist.

11. Lenkvorrichtung nach einem der Ansprüche 1 bis 10,
**dadurch gekennzeichnet, dass**
die Linearführung als Druckstück (3) ausgebildet ist.

12. Lenkvorrichtung nach einem der Ansprüche 1 bis 11,
**dadurch gekennzeichnet, dass**
der Durchmesser der Lenkspindel (1) in einem Teilbereich reduziert ist.

13. Lenkvorrichtung nach einem der Ansprüche 1 bis 12,
**dadurch gekennzeichnet, dass**
die Verbindung zwischen der Lenkspindel (1) und den Begrenzungsgliedern (4) mittels einer Verzahnung erfolgt.

14. Lenkvorrichtung nach einem der Ansprüche 1 bis 13,
**dadurch gekennzeichnet, dass**
die Lenkspindel (1) mit einer Sensoreinrichtung (11) zur Erfassung des Drehwinkels versehen ist.

15. Lenkvorrichtung nach Anspruch 14,
**dadurch gekennzeichnet, dass**
die Sensoreinrichtung (11) als Magnet-/Sensoranordnung ausgebildet ist, wobei ein Magnet (12) oder ein Sensor (13) an dem Gewindeelement (2) befestigt ist und wobei das jeweils andere Element der Magnet-/Sensoranordnung am Gehäuse (9) angeordnet ist.

16. Lenkvorrichtung nach Anspruch 15,
**dadurch gekennzeichnet, dass**
der Magnet als Stabmagnet (12) oder Ringmagnet und der Sensor als magnetoresistiver Sensor (13) ausgebildet ist.

17. Lenkvorrichtung nach Anspruch 15 oder 16,
**dadurch gekennzeichnet, dass**
die Sensoreinrichtung (11) mehrere Magnete (12) und zugeordnete Sensoren (13) aufweist.

## Claims

1. Steering apparatus for a motor vehicle, having a steering spindle (1) with an external thread (1a), on which a threaded element (2) is arranged which, on account of an operative connection with a linear guide (3), can move linearly between two limiting elements (4) in the event of a rotational movement of the steering spindle (1) and thus limits the rotational movement of the steering spindle (1), **characterized in that** a force element (7) presses the linear guide (3) against the threaded element (2) in such a way that the concentric position of the threaded element (2) with respect to the steering spindle (1) is displaced.

2. Steering apparatus according to Claim 1, **characterized in that** the linear guide (3) is configured as a tongue-and-groove connection.

3. Steering apparatus according to Claim 2, **characterized in that** the threaded element (2) has a trapezoidal longitudinal groove (5).

4. Steering apparatus according to Claim 2 or 3, **characterized in that** the linear guide (3) has a tongue or a web (6) which is suitable for engagement in the longitudinal groove (5).

5. Steering apparatus according to Claims 3 and 4, **characterized in that** the width of a groove bottom (5b) of the longitudinal groove (5) is smaller than the width of a front face (6b) of the web (6).

6. Steering apparatus according to Claim 5, **characterized in that** the angles of the flanks (5a) of the longitudinal groove (5) correspond substantially to the angle of the flanks (6a) of the web (6).

7. Steering apparatus according to one of Claims 1 to 6, **characterized in that** the force element is configured as an elastic element or as a spring element (7).

8. Steering apparatus according to one of Claims 1 to 7, **characterized in that** the threaded element (2) and/or the limiting elements (4) are/is provided with stop elements (8a, 8b).

9. Steering apparatus according to Claim 8, **characterized in that** the stop elements (8a, 8b) are guided elastically in the threaded element (2) and/or the limiting elements (4).

10. Steering apparatus according to one of Claims 1 to 9, **characterized in that** the stroke of the linear guide (3) is limited by means of a stop (10).

11. Steering apparatus according to one of Claims 1 to 10, **characterized in that** the linear guide is configured as a pressure piece (3).

12. Steering apparatus according to one of Claims 1 to 11, **characterized in that** the diameter of the steering spindle (1) is reduced in a part region.

13. Steering apparatus according to one of Claims 1 to 12, **characterized in that** the steering spindle (1) and the limiting elements (4) are connected by means of a toothing system.

14. Steering apparatus according to one of Claims 1 to 13, **characterized in that** the steering spindle (1) is provided with a sensor device (11) for detecting the rotational angle.

15. Steering apparatus according to Claim 14, **characterized in that** the sensor device (11) is configured as a magnet/sensor arrangement, a magnet (12) or a sensor (13) being fastened to the threaded element (2) and the respective other element of the magnet/sensor arrangement being arranged on the housing (9).

16. Steering apparatus according to Claim 15, **characterized in that** the magnet is configured as a bar magnet (12) or toric magnet and the sensor is configured as a magnetoresistive sensor (13).

17. Steering apparatus according to Claim 15 or 16, **characterized in that** the sensor device (11) has a plurality of magnets (12) and associated sensors (13).

## Revendications

1. Dispositif de direction pour un véhicule automobile comprenant un arbre de direction (1) avec un filetage extérieur (1a), sur lequel est disposé un élément fileté (2), qui peut être déplacé linéairement entre deux organes de limitation (4) du fait d'une liaison coopérante avec une glissière linéaire (3) dans le cas d'un mouvement de rotation de l'arbre de direction (1) et qui limite ainsi le mouvement de rotation de l'arbre de direction (1),
**caractérisé en ce qu'**un élément de force (7) presse la glissière linéaire (3) contre l'élément fileté (2) de telle sorte que la position concentrique de l'élément fileté (2) par rapport à l'arbre de direction (1) se décale.

2. Dispositif de direction selon la revendication 1,
**caractérisé en ce que** la glissière linéaire (3) est réalisée sous la forme d'une liaison à rainure et clavette.

3. Dispositif de direction selon la revendication 2,
**caractérisé en ce que** l'élément fileté (2) présente une rainure longitudinale trapézoïdale (5).

4. Dispositif de direction selon la revendication 2 ou 3,
**caractérisé en ce que** la glissière linéaire (3) présente une clavette ou une arête (6) appropriée pour l'engagement dans la rainure longitudinale (5).

5. Dispositif de direction selon la revendication 3 ou 4,
**caractérisé en ce que** la largeur d'un fond de rainure (5b) de la rainure longitudinale (5) est plus petite que la largeur d'une face frontale (6b) de l'arête (6).

6. Dispositif de direction selon la revendication 5,
**caractérisé en ce que** les angles des flancs (5a) de la rainure longitudinale (5) correspondent essentiellement à l'angle des flancs (6a) de l'arête (6).

7. Dispositif de direction selon l'une quelconque des revendications 1 à 6,
**caractérisé en ce que** l'élément de force est réalisé sous la forme d'un élément élastique ou d'un élément à ressort (7).

8. Dispositif de direction selon l'une quelconque des revendications 1 à 7,
**caractérisé en ce que** l'élément fileté (2) et/ou les organes de limitation (4) sont pourvus d'éléments de butée (8a, 8b).

9. Dispositif de direction selon la revendication 8,
**caractérisé en ce que** les éléments de butée (8a, 8b) sont guidés élastiquement dans l'élément fileté (2) ou dans les organes de limitation (4).

10. Dispositif de direction selon l'une quelconque des revendications 1 à 9,
**caractérisé en ce que** le course de la glissière linéaire (3) est limitée au moyen d'une butée (10).

11. Dispositif de direction selon l'une quelconque des revendications 1 à 10,
**caractérisé en ce que** la glissière linéaire est réalisée sous la forme d'une pièce de pression (3).

12. Dispositif de direction selon l'une quelconque des revendications 1 à 11, **caractérisé en ce que** le diamètre de l'arbre de direction (1) est réduit dans une région partielle.

13. Dispositif de direction selon l'une quelconque des revendications 1 à 12,
**caractérisé en ce que** la liaison entre l'arbre de direction (1) et les organes de limitation (4) s'effectue au moyen d'une denture.

14. Dispositif de direction selon l'une quelconque des revendications 1 à 13,
**caractérisé en ce que** l'arbre de direction (1) est pourvu d'un dispositif de capteur (11) pour détecter l'angle de rotation.

15. Dispositif de direction selon la revendication 14,
**caractérisé en ce que** le dispositif de capteur (11) est réalisé sous la forme d'un système aimant/capteur, un aimant (12) ou un capteur (13) étant fixé sur l'élément fileté (2) et l'autre élément respectif du système aimant/capteur étant disposé sur le boîtier (9).

16. Dispositif de direction selon la revendication 15,
**caractérisé en ce que** l'aimant est réalisé sous la forme d'une barre aimantée (12) ou d'un aimant annulaire et le capteur est réalisé sous la forme d'un capteur magnétorésistif (13).

17. Dispositif de direction selon la revendication 15 ou 16, **caractérisé en ce que** le dispositif de capteur (11) présente plusieurs aimants (12) et capteurs (13) associés.
